(19) Europäisches Patentamt
European Patent Office
Office européen des brevets

(11) **EP 0 625 611 B1**

(12) **EUROPÄISCHE PATENTSCHRIFT**

(45) Veröffentlichungstag und Bekanntmachung des Hinweises auf die Patenterteilung:
**12.11.1997 Patentblatt 1997/46**

(51) Int Cl.$^6$: **D21H 19/38**, D21H 19/44

(21) Anmeldenummer: **94105704.4**

(22) Anmeldetag: **13.04.1994**

(54) **CaCO3-Talkum-Streichpigmentslurry, Verfahren zu seiner Herstellung und seine Verwendung**

Coating slurry containing talc and calcium carbonate, method of producing it and its use

Bouillie pigmentaire pour le couchage à base de talc et de carbonate de calcium, son procédé de préparation, et son utilisation

(84) Benannte Vertragsstaaten:
**AT DE FR GB IT**

(30) Priorität: **16.04.1993 DE 4312463**

(43) Veröffentlichungstag der Anmeldung:
**23.11.1994 Patentblatt 1994/47**

(73) Patentinhaber: **Plüss-Staufer AG**
**4665 Oftringen (CH)**

(72) Erfinder:
- **Naydowski, Christian, Dr.**
  **CH-4805 Brittnau/AG (CH)**
- **Strauch, Dieter**
  **CH-4800 Zofingen/AG (CH)**

(74) Vertreter: **Reinhard - Skuhra - Weise & Partner**
**Friedrichstrasse 31**
**80801 München (DE)**

(56) Entgegenhaltungen:
**DE-C- 3 312 778**

- **DATABASE WPI, Derwent Publications Ltd., GB; no. 87-139679**
- **DATABASE WPI, Derwent Publications Ltd., GB; no. 87-133307**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft einen $CaCO_3$-Talkum-Streichpigmentslurry, ein Verfahren zu seiner Herstellung und seine vorzugsweisen Verwendungen.

Gestrichene Papiere sind mit einer Masse gestrichen, die im wesentlichen ein Bindemittel und ein Pigment in Form eines mineralischen Füllstoffs enthält. Eine Beschreibung der Bestandteile von Papierbeschichtungsmaterialien und ihre Anwendung ist z.B. im Buch von James P. Casey "Pulp and Paper Chemistry and Technology" Kapitel XIX, Bd. III (1961) gegeben.

In der Drucktechnik sind im wesentlichen drei verschiedene Verfahren bekannt, nämlich Buchdruck, der Offsetdruck und der Tiefdruck.

Der Buchdruck ist ein sogenanntes Hochdruckverfahren. Wie beim Stempel steht die zu druckende Fläche erhaben in der Druckform. Mittels Walze wird die erhabene Bildfläche eingefärbt. Bei diesem Druckverfahren wird auch gestrichenes Papier verwendet, das Kaolin oder Calciumcarbonat enthält.

Der Offsetdruck ist ein sogenanntes Flachdruckverfahren, d.h. die druckenden und nichtdruckenden Teile liegen in einer Ebene. Sie unterscheiden sich dadurch, daß die druckenden Teile Fett (d.h. Druckfarbe) annehmen und abgeben, Wasser jedoch abweisen, während die nichtdruckenden Teile Wasser festhalten, aber Fett (Farbe) abweisen. Der rotierende Druckzylinder passiert zuerst die wasserführende und dann die farbführende Walze. Er druckt jedoch nicht direkt auf das Papier, sondern auf ein über einen Zylinder gespanntes Gummituch. Erst von diesem nimmt das Papier, mittels Zylinder gegen den Gummizylinder gedrückt das Druckbild ab. Bei diesem Verfahren werden sowohl Kaolin als auch Calciumcarbonat als Streichpigmente verwendet.

Beim Tiefdruck liegen die druckenden Teile des Zylinders unter der polierten Oberfläche. Der Zylinder passiert zuerst die mit flüssiger Farbe gefüllte Wanne, dann den Rakel, ein Stahllineal, das die überschüssige Farbe wegnimmt, während die zum Druck bestimmte Farbe in Näpfchen solange festgehalten wird, bis diese von dem das Papier führenden Pressur überrollt und die Farbe dabei herausgesaugt wird.

Für den Tiefdruck wird als Streichpigment in der Praxis ganz überwiegend nur Kaolin verwendet. Die Verwendung von Kaolin als Streichpigment in Tiefdruckpapieren ist jedoch mit einer Reihe von Nachteilen verbunden, insbesondere schlechtes rheologisches Verhalten; dadurch ist es nicht möglich, mit hohem Feststoffgehalt zu streichen, was hohe Energiekosten bei der Strichtrocknung bedingt; außerdem haben Streichpigmente auf Kaolinbasis in Tiefdruckpapieren sehr niedrige Weißgradwerte.

Weiterhin wird nach dem Stande der Technik, sogenannter "Superclay" als Streichpigment in Tiefdruckpapieren verwendet.

Die Verwendung von Talkum als Streichpigment ist bereits untersucht worden. In Finnland wird z.B. Talkum als Füllstoff in der Papierherstellung bereits seit den sechziger Jahren verwendet. Talkum ähnelt in seiner chemischen Struktur etwas dem Kaolin. Kaolin ist ein plättchenförmiges Aluminiumsilikat. Talkum ist auch ein plättchenförmiges Pigment, jedoch Magnesiumsilikat. Auch weichen die wichtigsten physikalischen Eigenschaften des Talkums nicht wesentlich von denen des Kaolins ab.

Aber auch Talkum weist eine Reihe von Nachteilen bei Einsatz in Papierstreichmassen auf: Wegen seiner chemischen Struktur ist Talkum hydrophob, was die Benetzung der Pigmentfläche bei Dispergierungen erschwert und was auch eine gute Entlüftung während Dispergierungen voraussetzt. Auch setzt Talkum einen neuen Typ von Bindemitteln und eine andere Fahrweise in der Streichmaschine im Vergleich zu Kaolin voraus, damit Wasserretention, Luftgehalt und Rheologie keine größeren Probleme verursachen.

Aufgrund dieser Nachteile wurde auch bereits versucht, eine Pigment-Mischung aus Kaolin und Talkum in Streichmassen für Tiefdruckpapiere und Rollen-Offset-Papiere einzusetzen (s. Tappi Journal, Band 68, Nr. 11, S. 92 und 93, November 1985).

Aus dem "Wochenblatt für Papierfabrikation", 107, Seiten 909 bis 914 (1979) Nr. 23/24 ist es bereits bekannt, Zusätze von 5 - 10 % Talkum zu Calciumcarbonat-Strichen zu verwenden, und zwar in Offsetpapieren.

Schließlich ist es aus Tappi Journal, Band 68, Nr. 11, S. 93, November 1985 ebenfalls bereits bekannt, eine Mischung von 85 % Talkum und 15 % Calciumcarbonat als Pigment-Mischung einzusetzen.

Die Vermahlung und Aufbereitung von Talkum alleine zu Slurries ist durch starke Hydrophobie des Produktes sehr schwierig. Deshalb hat man nur für eine bessere Aufbereitung zur Erzielung höherer Feststoffgehalte in dem Slurry dem Talkum 15 % $CaCO_3$ zugesetzt, nicht aber aus Gründen besserer Streichfarben. Diese Mischung mit 85 % Talkum und 15 % $CaCO_3$ ergibt hinsichtlich Papiereigenschaften im Tiefdruck keine Vorteile gegenüber der Talkum/Kaolinmischung. Es besteht sogar die Gefahr, daß durch den weiterhin niedrigen Feststoffgehalt in der Streichfarbe (der rheologisch positive Einfluß von $CaCO_3$ beginnt erst bei Zusätzen um 50 % und höher) der Papierglanz vermindert wird. Aufgrund zu hoher Rutsch- und Gleiteigenschaften dieser Strichoberfläche ist die Verarbeitbarkeit sehr problematisch.

Aus der EP 0 332 102 A2 ist bereits eine Pigmentmischung bekannt, die aus 40 - 80 Gew.% Calciumcarbonat und/oder Dolomit und 20 - 60 Gew.% Talkum oder 20 - 60 Gew.% eines Talkum-Kaolin-Gemischs oder 20 - 60 Gew. % eines Talkum-Glimmer-Gemischs besteht. Dieses Gemenge wird durch Mischen der einzelnen Bestandteile hergestellt. Es kann in der Papierindustrie, insbesondere in der Streichmasse von Tiefdruckpapieren eingesetzt werden. Diese bekannte Pigmentmischung weist insbesondere folgende Nachteile auf:

- Schlechte Dispergierbarkeit durch die Hydrophobie des Talkums.

- Inhomogenitäten im angerührten Slurry durch Talkumagglomerate; dadurch sind Unregelmäßigkeiten in der Strichbildung festzustellen.

- Gemäß den Ausführungsbeispielen werden nur geringe Feststoffgehalte erreicht.

Es wurde deshalb bereits vorgeschlagen, Kalzit und Talkum gemeinsam zu vermahlen. Nach der Lehre der JP-A-62 078 296 wird eine Mischung der beiden Pigmente in Anwesenheit eines Hilfsmittels vermahlen. Ein Dispergiermittel wird nach dem Mahlen zugefügt. Aus der DE 33 12 778 C2 ist ein derartiges Verfahren auch bekannt, wobei eine Talkum- und Kalzitpulvermischung in Form einer wäßrigen Suspension nach dem Reibmahlungsverfahren mikrovermahlen wird. Vorzugsweise wird dabei eine Talkum-Kalzit-Wassermischung mit einem Feststoffgehalt von 50 bis 80 Gew.% eingesetzt, wobei Talkum und Kalzit vorzugsweise in einem Mischungsverhältnis von 2:1 bis 1:3 verwendet werden.

Die Anmelderin hat versucht dieses Verfahren anzuwenden, obwohl die DE 33 12 778 C2 kein einziges Ausführungsbeispiel enthält. Es zeigte sich, daß der erforderliche Feststoffgehalt nicht erreicht werden konnte.

Die Anmelderin hat deshalb versucht, die üblichen Mahlhilfsmittel zu verwenden, um auf diese Weise bessere Ergebnisse zu erzielen. Solche Mahlhilfsmittel sind z.B. aus der DE 27 48 243 A1 bekannt, die sich auch auf ein Talkumpigment bezieht. Nach der DE 27 48 243 A1 wird Talkum während oder nach dem Granulieren mit einer oberflächenaktiven Substanz, einem Polyelektrolyt und einem Antischaummittel bzw. Carboxycellulose und Polyelektrolyt und gegebenenfalls auch anderen Zusätzen in Berührung gebracht und in Wasser oder einer Lösung von einem oder mehreren dieser Substanzen aufgeschlämmt.

Trotz der Verwendung von bekannten Mahlhilfsmitteln zeigte es sich jedoch, daß nach dem Verfahren der DE 33 12 778 C2 eine starke Vergrauung des Endproduktes festzustellen war, daß schon unmittelbar nach der Vermahlung sehr hohe Viskositätswerte gemessen wurden und daß keine ausreichende Lagerstabilität erzielt werden konnte.

Schließlich ist es aus "Wochenblatt für Papierfabrikation" 1991 Nr. 17, Seiten 662 - 665 bekannt, daß mit Talk/Carbonatmischungen gut bedruckbare Tiefdruckpapiere hergestellt werden können, wenn Auftragswerke benutzt werden, die höhere Streichmaschinengeschwindigkeiten und niedrige Abrißhäufigkeiten ermöglichen.

Eine Aufgabe der vorliegenden Erfindung ist es daher, einen $CaCO_3$-Talkum-Pigmentslurry herzustellen, der insbesondere einen hohen Feststoffgehalt, eine niedrige Viskosität und eine gute Lagerstabilität aufweist.

Diese Aufgabe wird erfindungsgemäß dadurch gelöst, daß der Slurry besteht aus den folgenden vier covermahlenen Bestandteilen:

a. 24 - 64 Gew.% $CaCO_3$
b. 5 - 48 Gew.% Talkum
c. 20 - 40 Gew.% $H_2O$ und
d. einer Hilfsstoffkombination aus

0,05 - 1,4 Gew.% handelsüblicher Mahlhilfsmittel und
0,05 - 1,2 Gew.% handelsüblicher Dispergiermittel

und daß das Pigmentgemenge einen mittleren statistischen Teilchendurchmesser von 0,4 μm - 1,5 μm aufweist.

Alle Gewichtsprozent-Angaben der vorliegenden Anmeldung beziehen sich auf absolut trockene (atro) Bestandteile.

Vorzugsweise weist das Pigmentgemenge folgende Korngrößenverteilung auf:

a. 95 - 100 % an Teilchen < 10 μm
b. 50 - 95 % an Teilchen < 2 μm
c. 27 - 75 % an Teilchen < 1 μm
d. 0,1 - 35 % an Teilchen < 0,2 μm,

jeweils bezogen auf den Äquivalentdurchmesser der Teilchen.

Vorzugsweise besteht der Slurry aus den folgenden vier covermahlenen Bestandteilen,

a. 28 - 61 Gew.% $CaCO_3$
b. 10 - 44 Gew.% Talkum
c. 22 - 38 Gew.% $H_2O$ und
d. einer Hilfsstoffkombination aus

0,1 - 1,3 Gew.% handelsüblicher Mahlhilfsmittel und
0,1 - 1,0 Gew.% handelsüblicher Dispergiermittel

und das Pigmentgemenge weist einen mittleren statistischen Teilchendurchmesser von 0,4 μm - 1,5 μm auf.
Vorzugsweise besteht der Slurry aus den folgenden vier covermahlenen Bestandteilen,

a. 33 - 56 Gew.% $CaCO_3$
b. 14 - 37 Gew.% Talkum
c. 25 - 36 Gew.% $H_2O$ und
d. einer Hilfsstoffkombination aus

0,2 - 1,2 Gew.% handelsüblicher Mahlhilfsmittel und
0,2 - 0,6 Gew.% handelsüblicher Dispergiermittel

und das Pigmentgemenge weist einen mittleren statistischen Teilchendurchmesser von 0,4 μm - 1,5 μm auf.
Vorzugsweise besteht der Slurry aus den folgenden vier covermahlenen Bestandteilen,

a. 39 - 51 Gew.% $CaCO_3$
b. 18 - 31 Gew.% Talkum
c. 27 - 33 Gew.% $H_2O$ und
d. einer Hilfsstoffkombination aus

0,3 - 0,8 Gew.% handelsüblicher Mahlhilfsmittel und
0,25 - 0,5 Gew.% handelsüblicher Dispergiermittel

und das Pigmentgemenge weist einen mittleren statistischen Teilchendurchmesser von 0,4 μm - 1,5 μm auf.
Vorzugsweise besteht der Slurry aus den folgenden vier covermahlenen Bestandteilen

a. 44 - 48 Gew.% $CaCO_3$
b. 21 - 25 Gew.% Talkum
c. 28,2 - 32,2 Gew.% Wasser und
d. einer Hilfsstoffkombination aus

0,35 - 0,45 Gew.% handelsüblicher Mahlhilfsmittel und
0,35 - 0,45 Gew.% handelsüblicher Dispergiermittel

und das Pigmentgemenge weist einen mittleren statistischen Teilchendurchmesser von 0,4 μm - 1,5 μm auf.
Vorzugsweise weist das Pigmentgemenge einen mittleren statistischen Teilchendurchmesser von 0,7 - 1,3 μm auf.
Vorzugsweise weist das Pigmentgemenge folgende Korngrößenverteilung auf:

a. 96 - 100 % an Teilchen < 10 μm
b. 60 - 92 % an Teilchen < 2 μm
c. 35 - 70 % an Teilchen < 1 μm
d. 3 - 28 % an Teilchen < 0,2 μm,
jeweils bezogen auf den Äquivalentdurchmesser der Teilchen.

Vorzugsweise weist das Pigmentgemenge einen mittleren statistischen Teilchendurchmesser von 0,8 - 1,1 μm auf.
Vorzugsweise weist das Pigmentgemenge folgende Korngrößenverteilung auf:

a. 98 - 100 % an Teilchen < 10 μm
b. 68 - 85 % an Teilchen < 2 μm
c. 43 - 62 % an Teilchen < 1 μm
d. 9 - 22 % an Teilchen < 0,2 μm,

jeweils bezogen auf den Äquivalentdurchmesser der Teilchen.

Vorzugsweise weist das Pigmentgemenge einen mittleren statistischen Teilchendurchmesser von 0,9 µm auf.

Vorzugsweise weist das Pigmentgemenge folgende Korngrößenverteilung auf:

a. 99 % an Teilchen < 10 µm
b. 78 % an Teilchen < 2 µm
c. 53 % an Teilchen < 1 µm
d. 28 % an Teilchen < 0,2 µm,

jeweils bezogen auf den Äquivalentdurchmesser der Teilchen.

Vorzugsweise ist das Mahlhilfsmittel ein wasserlösliches Polymer oder Copolymer mit einem Gehalt an sauren Gruppen, ausgewählt aus Carboxylgruppen und/oder Sulfonsäuregruppen oder eines ihrer wasserlöslichen Salze.

Vorzugsweise besteht das Mahlhilfsmittel aus den Polymeren und/oder Copolymeren von Acrylsäuren.

Vorzugsweise wird das Mahlhilfsmittel gebildet durch die Polymeren und/oder Copolymeren von Acrylsäuren, die vollständig neutralisiert sind durch a) mindestens ein Neutralisationsmittel mit einer monovalenten Funktion und b) mindestens ein Neutralisationsmittel mit einer polyvalenten Funktion oder ein Amin.

Vorzugsweise besteht das Mahlhilfsmittel aus der Fraktion der vollständig neutralisierten Acrylsäurepolymeren und/oder -copolymeren, die eine spezifische Viskosität zwischen 0,3 und 0,8 besitzt.

Vorzugsweise ist das Mahlhilfsmittel ein Polymerisat oder Copolymerisat von wenigstens einem der Monomeren und/oder Comonomeren aus der Gruppe der Acryl-, Methacryl-, Itacon-, Croton-, Fumarsäure und Maleinsäureanhydrid.

Vorzugsweise ist das Mahlhilfsmittel ein Na-Ca-Salz einer Polyacrylsäure.

Weitere zur Ausführung der Erfindung geeignete Mahlhilfsmittel sind in der europäischen Patentschrift EP-A-0 100 947 offenbart.

Vorzugsweise ist das Dispergiermittel ein wasserlösliches Polymer oder Copolymer mit einem Gehalt an sauren Gruppen, ausgewählt aus Carboxylgruppen und/oder Sulfonsäuregruppen oder eines ihrer wasserlöslichen Salze.

Vorzugsweise besteht das Dispergiermittel aus den Polymeren und/oder Copolymeren von Acrylsäure.

Vorzugsweise ist das Dispergiermittel ein Kaliumsalz einer Polyacrylsäure.

Vorzugsweise ist das Dispergiermittel ein Kaliumsalz eines Copolymerisats aus Acrylsäure und Butylacrylsäure.

Der erfindungsgemäße Slurry wird nach Anspruch 16 dadurch hergestellt, daß in an sich bekannter Weise das vorzerkleinerte $CaCO_3$ mit dem vorzerkleinerten Talkum in wäßriger Suspension unter Zusatz der Hilfsstoffkombination naß covermahlen wird.

Alle in der vorliegenden Patentanmeldung genannten Feinheitsmerkmale der erfindungsgemäß hergestellten Produkte wurden durch Sedimentationsanalyse im Schwerefeld mit dem SEDIGRAPH 5100 der Firma Micromeritics, U.S.A. bestimmt. Dieses Gerät ist dem Durchschnittsfachmann bekannt und wird weltweit zur Bestimmung der Feinheit von Füllstoffen und Pigmenten verwendet. Die Messung erfolgte in einer 0,1 Gew.%-igen, wäßrigen $Na_4P_2O_7$-Lösung. Die Dispergierung der Proben wurde mittels Schnellrührer und Ultraschall vorgenommen.

Die gemessene Teilchenverteilung wird in einer X-Y-Abbildung als Durchgangs-Summenkurve dargestellt (s. z.B. Belger, P., Schweizerische Vereinigung der Lack- und Farben-Chemiker, XVII. FATIPEC-Kongreß, Lugano, 23. bis 28. September 1984), wobei auf der X-Achse der Äquivalentdurchmesser gemäß DIN 66 160, S. 3 und auf der Y-Achse der Anteil an Teilchen in Gew.% aufgetragen wird.

Die vorstehend definierten Feinheitsmerkmale wurden aus den mit dem vorstehend beschriebenen Verfahren erhaltenen Kurven abgelesen bzw. errechnet.

Zu den vorstehenden Definitionen siehe auch Belger, P. Schweizerische Vereinigung der Lack- und Farben-Chemiker, XVII. FATIPEC-Kongreß, Lugano, 23. bis 28. September 1984).

Die Messung der Korngrößenverteilung durch Sedimentationsanalyse setzt, wie der Durchschnittsfachmann weiß, voraus, daß die Dichte der Teilchen bekannt ist. Erfindungsgemäß handelt es sich um ein covermahlenes Pigmentgemenge bestehend aus Calciumcarbonatteilchen und Talkumteilchen. Für beide Teilchenarten kann eine mittlere Dichte von 2,7 g/cm$^3$ angenommen werden.

Alle in der Patentanmeldung genannten Viskositätswerte der erfindungsgemäß hergestellten Produkte wurden mit dem BROOKFIELD-Viskosimeter RVTDV-II+ der Firma BROOKFIELD, U.S.A. bestimmt. Dieses Gerät ist dem Durchschnittsfachmann bekannt und wird weltweit zur Bestimmung der Viskosität von Flüssigkeiten und Slurries verwendet. Die Messungen erfolgten mit der Meßspindel Nr. 3 bei einer Drehzahl von 100 min$^{-1}$ und einer Slurrytemperatur von 22 ± 2°C.

Weitere Merkmale und Vorteile der Erfindung ergeben sich aus der folgenden Beschreibung von Ausführungsbeispielen, Vergleichsbeispielen und Anwendungsbeispielen, wobei alle Prozentangaben Gewichtsprozente sind.

Ausführungsbeispiel:

Das für die Covermahlung verwendete natürliche Calciumcarbonat wurde zunächst in an sich bekannter Weise trocken und/oder naß vermahlen und anschließend durch Klassierung nach Korngröße mittels Windsichter und/oder Hydrozyklon aufbereitet.

Das so zerkleinerte Calciumcarbonat wies folgende Korngrößenverteilung auf:

99 % < 20 µm

82 % < 10 µm

24 % < 2 µm

13 % < 1 µm.

Das für die Covermahlung verwendete Talkum wurde in an sich bekannter Weise durch trockene und/oder nasse Vermahlung und anschließend durch Klassierung nach Korngröße mittels Windsichter und/oder Hydrozyklon aufbereitet.

Das so vorzerkleinerte Talkum wies folgende Korngrößenverteilung auf:

86 % < 20 µm

53 % < 10 µm

9 % < 2 µm

6 % < 1 µm.

Für die Covermahlung wurden die vier erfindungsgemäßen Bestandteile in folgenden Anteilen vermengt:

| 46,7 % | nat CaCO$_3$ | |
|--------|-------------|---|
| 23,3 % | Talkum | |
| 29,2 % | Wasser | |
| 0,8 % | Hilfsmittelkombination, bestehend aus | |
| | 0,4 % | Mahlhilfsmittel in Form eines Na-Ca-Salzes einer Polyacrylsäure. |
| | 0,4 % | Dispergiermittel in Form eines K-Salzes eines Copolymerisats aus Acrylat und Butylacrylat. |

Die Covermahlung wurde in einer Rührwerkskugelmühle ausgeführt und dadurch der CaCO$_3$-Talkum-Streichpigmentslurry folgender Korngrößenverteilung hergestellt:

99 % < 10 µm

74 % < 2 µm

49 % < 1 µm

12 % < 0,2 µm.

Diese Korngrößenverteilung entspricht einem mittleren statistischen Teilchendurchmesser von 1,1 µm. Das Produkt weist folgende weitere Kennzeichen auf:

| | |
|---|---|
| Weiße Elrepho R 457 | 90 % |
| Feststoffgehalt des Slurries | 69 % |
| Viskosität (nach 15 min Rühren des Slurries) | 200mPas |

Die Lagerstabilität des Slurries wird ausgedrückt durch die Viskosität, auf die er sich im ungerührten Zustand einstellt:
Viskosität (ungerührt nach 14 Tagen):          400mPas.
Dieser Wert entspricht einer überraschend guten Lagerstabilität des Slurries.

Anwendungsbeispiele und Vergleichsbeispiele:

In oben beschriebener Weise wurde ein Slurry-Produkt hergestellt und im Vergleich zu Streichpigmentslurries gemäß dem Stand der Technik in der Papierstreichfarbe geprüft.

1. Streichpigment:          Superclay (Kaolin)
(entsprechend dem Stand der Technik)

2. Streichpigment:          HYDROCARB 90-MO (nat. $CaCO_3$) (entsprechend dem Stand der Technik)

3. Streichpigment:          $CaCO_3$-Talkum Streichpigmentslurry
(entsprechend der Erfindung)

- Für das 1. Streichpigment wurden basierend auf 100 GT Superclay folgende Produkte zur Streichfarbenherstellung verwendet:

| | |
|---|---|
| Bindemittel (acrylsäureesterhaltiges Mischpolymerisat, selbstverdickend) | 5,0 GT atro |
| Dispergiermittel (Na-Polyacrylat) | 0,3 GT atro |
| Calciumstearat | 0,8 GT atro |
| (GT = Gewichtsteile; atro = absolut trocken) | |

Der Feststoffgehalt der Streichfarbe wurde auf 54,5 % eingestellt.

- Für das 2. Streichpigment wurden, ebenfalls basierend auf 100 GT Pigment folgende Produkte zur Streichfarbenherstellung verwendet:

| | |
|---|---|
| Bindemittel (acrylsäureesterhaltiges Mischpolymerisat, selbstverdickend) | 5,0 GT atro |
| Calciumstearat | 0,8 GT atro |

Der Feststoffgehalt der Streichfarbe wurde auf 64,5 % eingestellt.

- Für das 3. Streichpigment wurde die Streichfarbenrezeptur wie bei 2. gewählt. Der Feststoffgehalt der Streichfarbe wurde auf 59,8 % eingestellt.

Wie die folgende Tabelle 1 zeigt, konnte mit dem erfindungsgemäßen Pigmentslurry ein hoher Feststoffgehalt von 59,8 % eingestellt werden, obwohl die Verarbeitungsviskosität sehr viel niedriger war im Vergleich zu Kaolin, der das typische Streichpigment nach dem Stand der Technik ist.

Tabelle 1:

| | Superclay | Hydrocarb 90 | erfindungsgemäßes Pigmentgemenge |
|---|---|---|---|
| Feststoffgehalt der Streichfarbe in % | 54,5 | 64,5 | 59,8 |
| Viskosität in mPas bei 20 Upm | 8.900 | 6.400 | 3.790 |

Streichbedingungen für ein LWC-Tiefdruckpapier:

Streichrohpapier: 36 g/m$^2$ holzhaltig
Strichauftrag: Oberseite (OS): 9 g/m$^2$
Siebseite (SS): 10 g/m$^2$

Streichaggregat: Labor-Blade-Coater
20 m/min Arbeitsgeschwindigkeit
Trocknung: IR-Trockner
Satinage: Zweiwalzen-Labor-Kalander
3mal pro Seite
900 N/cm Liniendruck
90°C Walzentemperatur

Prüfbedingungen:

Glanz: nach Tappi im 75° Ein- und Abstrahlwinkel
Rauhigkeit: mit dem Parker Printer Surf PPS 78
Bedruckbarkeit: Heliotest (20 missing dots, 40 kp, mm)
Opazität: Differenzmessung in %
Glätte: Sek. Glätte Bekk
Weisse: Weisse R-457 + UV

Prüfresultate:

Tabelle 2:

| | Streichpigment Nr. | | |
|---|---|---|---|
| | 1 | 2 | 3 |
| Opazität, % | 89,0 | 86,6 | 88,9 |
| Rauhigkeit, µm | 1,8/1,5 | 1,9/1,8 | 1,6/1,5 |
| Glätte, sek. Glätte Bekk | 2990/2150 | 2235/1515 | 3360/2105 |
| Bedruckbarkeit, mm | 67/42 | 14/10 | 94/66 |
| Weisse, % | 72,3/73,1 | 76,7/77,9 | 75,9/76,6 |
| Papierglanz % | 45/48 | 42/43 | 42/40 |

Die Meßergebnisse zeigen für das erfindungsgemäße Streichpigment überraschend gute Eigenschaften. Insbesondere die Bedruckbarkeit, die die wichtigste Eigenschaft eines Pigments für den Tiefdruck darstellt, ist überraschend deutlich höher als beim Kaolin. Aber auch Weißgrad, Rauhigkeit und Glätte zeigen Vorteile im Vergleich zum Kaolin als Stand der Technik. Die Opazität ist vergleichbar bei etwas geringerem Papierglanz.

Der erfindungsgemäße CaCO$_3$-Talkum-Streichpigmentslurry kann insbesondere vorteilhaft Verwendung finden in der Papierindustrie, besonders zur Herstellung einer Streichmasse für die Papierindustrie nach Anspruch 17, ganz besonders vorteilhaft zur Herstellung einer Streichmasse für Tiefdruckpapiere.

Hervorragend geeignet ist das erfindungsgemäße Produkt zur Herstellung einer Streichmasse für leichtgewichtige gestrichene Tiefdruckpapiere (LWC), insbesondere auch bei hoher Auftragsgeschwindigkeit (bis 1.500 m/min).

Darüber hinaus ist das erfindungsgemäße Produkt auch gut geeignet zur Herstellung von Rollen-Offsetpapieren, insbesondere zur Herstellung von leichtgewichtigen gestrichenen Rollen-Offsetpapieren (LWC-Rollen-Offsetpapieren).

Die Erfindung weist insbesondere folgende Vorteile auf:

- hoher Feststoffgehalt
- niedrige Viskosität und hohe Lagerstabilität des Slurries.
- ausgezeichnete Bedruckbarkeit in Tiefdruckpapieren bei höherer Papierweisse, besserer Glätte und geringerer Rauhigkeit der Papiere.

**Patentansprüche**

1. $CaCO_3$-Talkum-Streichpigmentslurry, enthaltend ein $CaCO_3$-Talkum-Pigmentgemenge, Wasser und Mahlhilfsmittel,
   dadurch gekennzeichnet,
   daß er besteht aus den folgenden vier covermahlenen Bestandteilen:

   a. 24 - 64 Gew.% $CaCO_3$
   b. 5 - 48 Gew.% Talkum
   c. 20 - 40 Gew.% $H_2O$ und
   d. einer Hilfsstoffkombination aus

      0,05 - 1,4 Gew.% handelsüblicher Mahlhilfsmittel und
      0,05 - 1,2 Gew.% handelsüblicher Dispergiermittel

   und daß das Pigmentgemenge einen mittleren statistischen Teilchendurchmesser von 0,4 µm - 1,5 µm aufweist.

2. $CaCO_3$-Talkum-Streichpigmentslurry nach Anspruch 1,
   dadurch gekennzeichnet,
   daß das Pigmentgemenge folgende Korngrößenverteilung aufweist:

   a. 95 - 100 % an Teilchen < 10 µm
   b. 50 - 95 % an Teilchen < 2 µm
   c. 27 - 75 % an Teilchen < 1 µm
   d. 0,1 - 35 % an Teilchen < 0,2 µm,

   jeweils bezogen auf den Äquivalentdurchmesser der Teilchen.

3. $CaCO_3$-Talkum-Streichpigmentslurry nach einem oder mehreren der vorhergehenden Ansprüche,
   dadurch gekennzeichnet,
   daß er besteht aus den folgenden vier covermahlenen Bestandteilen,

   a. 28 - 61 Gew.% $CaCO_3$
   b. 10 - 44 Gew.% Talkum
   c. 22 - 38 Gew.% $H_2O$ und
   d. einer Hilfsstoffkombination aus

      0,1 - 1,3 Gew.% handelsüblicher Mahlhilfsmittel und
      0,1 - 1,0 Gew.% handelsüblicher Dispergiermittel

   und daß das Pigmentgemenge einen mittleren statistischen Teilchendurchmesser von 0,4 µm - 1,5 µm aufweist.

4. $CaCO_3$-Talkum-Streichpigmentslurry nach einem oder mehreren der vorhergehenden Ansprüche,
   dadurch gekennzeichnet,
   daß er besteht aus den folgenden vier covermahlenen Bestandteilen,

   a. 33 - 56 Gew.% $CaCO_3$
   b. 14 - 37 Gew.% Talkum
   c. 25 - 36 Gew.% $H_2O$ und
   d. einer Hilfsstoffkombination aus

      0,2 - 1,2 Gew.% handelsüblicher Mahlhilfsmittel und

0,2 - 0,6 Gew.% handelsüblicher Dispergiermittel

und daß das Pigmentgemenge einen mittleren statistischen Teilchendurchmesser von 0,4 μm - 1,5 μm aufweist.

5. $CaCO_3$-Talkum-Streichpigmentslurry nach einem oder mehreren der vorhergehenden Ansprüche, dadurch gekennzeichnet, daß er besteht aus den folgenden vier covermahlenen Bestandteilen,

a. 39 - 51 Gew.% $CaCO_3$
b. 18 - 31 Gew.% Talkum
c. 27 - 33 Gew.% $H_2O$ und
d. einer Hilfsstoffkombination aus

0,3 - 0,8 Gew.% handelsüblicher Mahlhilfsmittel und
0,25 - 0,5 Gew.% handelsüblicher Dispergiermittel

und daß das Pigmentgemenge einen mittleren statistischen Teilchendurchmesser von 0,4 μm - 1,5 μm aufweist.

6. $CaCO_3$-Talkum-Streichpigmentslurry nach einem oder mehreren der vorhergehenden Ansprüche, dadurch gekennzeichnet, daß er besteht aus den folgenden vier covermahlenen Bestandteilen:

a. 44 - 48 Gew.% $CaCO_3$
b. 21 - 25 Gew.% Talkum
c. 28,2 - 32,2 Gew.% Wasser und
d. einer Hilfsstoffkombination aus

0,35 - 0,45 Gew.% handelsüblicher Mahlhilfsmittel und
0,35 - 0,45 Gew.% handelsüblicher Dispergiermittel

und daß das Pigmentgemenge einen mittleren statistischen Teilchendurchmesser von 0,4 μm - 1,5 μm aufweist.

7. $CaCO_3$-Talkum-Streichpigmentslurry nach einem oder mehreren der vorhergehenden Ansprüche, dadurch gekennzeichnet, daß das Pigmentgemenge einen mittleren statistischen Teilchendurchmesser von 0,7 - 1,3 μm aufweist.

8. $CaCO_3$-Talkum-Streichpigmentslurry nach einem oder mehreren der vorhergehenden Ansprüche, dadurch gekennzeichnet, daß das Pigmentgemenge folgende Korngrößenverteilung aufweist:

a. 96 - 100 % an Teilchen < 10 μm
b. 60 - 92 % an Teilchen < 2 μm
c. 35 - 70 % an Teilchen < 1 μm
d. 3 - 28 % an Teilchen < 0,2 μm,

jeweils bezogen auf den Äquivalentdurchmesser der Teilchen.

9. $CaCO_3$-Talkum-Streichpigmentslurry nach einem oder mehreren der vorhergehenden Ansprüche, dadurch gekennzeichnet, daß das Pigmentgemenge einen mittleren statistischen Teilchendurchmesser von 0,8 - 1,1 μm aufweist.

10. $CaCO_3$-Talkum-Streichpigmentslurry nach einem oder mehreren der vorhergehenden Ansprüche, dadurch gekennzeichnet, daß das Pigmentgemenge folgende Korngrößenverteilung aufweist:

a. 98 - 100 % an Teilchen < 10 μm
b. 68 - 85 % an Teilchen < 2 μm
c. 43 - 62 % an Teilchen < 1 μm

d. 9 - 22 % an Teilchen < 0,2 µm,

jeweils bezogen auf den Äquivalentdurchmesser der Teilchen.

11. CaCO$_3$-Talkum-Streichpigmentslurry nach einem oder mehreren der vorhergehenden Ansprüche,
dadurch gekennzeichnet,
daß das Pigmentgemenge einen mittleren statistischen Teilchendurchmesser von 0,9 µm aufweist.

12. CaCO$_3$-Talkum-Streichpigmentslurry nach einem oder mehreren der vorhergehenden Ansprüche,
dadurch gekennzeichnet,
daß das Pigmentgemenge folgende Korngrößenverteilung aufweist:

a. 99 % an Teilchen < 10 µm
b. 78 % an Teilchen < 2 µm
c. 53 % an Teilchen < 1 µm
d. 28 % an Teilchen < 0,2 µm,

jeweils bezogen auf den Äquivalentdurchmesser der Teilchen.

13. CaCO$_3$-Talkum-Streichpigmentslurry nach einem oder mehreren der vorhergehenden Ansprüche,
dadurch gekennzeichnet,

daß das Mahlhilfsmittel ein wasserlösliches Polymer oder Copolymer mit einem Gehalt an sauren Gruppen,
ausgewählt aus Carboxylgruppen und/oder Sulfonsäuregruppen oder eines ihrer wasserlöslichen Salze ist,
daß das Mahlhilfsmittel vorzugsweise aus den Polymeren und/oder Copolymeren von Acrylsäuren besteht,
daß das Mahlhilfsmittel vorzugsweise durch die Polymeren und/oder Copolymeren von Acrylsäuren gebildet
wird, die vollständig neutralisiert sind durch a) mindestens ein Neutralisationsmittel mit einer monovalenten
Funktion und b) mindestens ein Neutralisationsmittel mit einer polyvalenten Funktion oder ein Amin und
daß insbesondere das Mahlhilfsmittel aus der Fraktion der vollständig neutralisierten Acrylsäurepolymeren
und/oder -copolymeren besteht, die eine spezifische Viskosität zwischen 0,3 und 0,8 besitzt.

14. CaCO$_3$-Talkum-Streichpigmentslurry nach einem oder mehreren der vorhergehenden Ansprüche,
dadurch gekennzeichnet,

daß das Mahlhilfsmittel ein Polymerisat oder Copolymerisat von wenigstens einem der Monomeren und/oder
Comonomeren aus der Gruppe der Acryl-, Methacryl-,
Itacon-, Croton-, Fumarsäure und Maleinsäureanhydrid ist und
daß insbesondere das Mahlhilfsmittel ein Na-Ca-Salz einer Polyacrylsäure ist.

15. CaCO$_3$-Talkum-Streichpigmentslurry nach einem oder mehreren der vorhergehenden Ansprüche,
dadurch gekennzeichnet,

daß das Dispergiermittel ein wasserlösliches Polymer oder Copolymer mit einem Gehalt an sauren Gruppen,
ausgewählt aus Carboxylgruppen und/oder Sulfonsäuregruppen oder eines ihrer wasserlöslichen Salze ist,
daß das Dispergiermittel vorzugsweise aus den Polymeren und/oder Copolymeren von Acrylsäure besteht und
daß das Dispergiermittel insbesondere ein Kaliumsalz einer Polyacrylsäure oder
daß das Dispergiermittel insbesondere ein Kaliumsalz eines Copolymerisats aus Acrylsäure und Butylacrylsäure ist.

16. Verfahren zur Herstellung des CaCO$_3$-Talkum-Streichpigmentslurries nach einem oder mehreren der vorhergehenden Ansprüche,
dadurch gekennzeichnet,
daß in an sich bekannter Weise das vorzerkleinerte CaCO$_3$ mit dem vorzerkleinerten Talkum in wäßriger Suspension unter Zusatz einer Hilfsstoffkombination aus 0,05-1,4 Gew.% handelsüblicher Mahlhilfsmittel und 0,05-1,2
Gew.% handelsüblicher Dispergiermittel naß covermahlen wird.

17. Verwendung des CaCO$_3$-Talkum-Streichpigmentslurries nach einem oder mehreren der vorhergehenden Ansprüche zur Herstellung einer Streichmasse für die Papierindustrie, insbesondere zur Herstellung einer Streichmasse für Tiefdruckpapiere, insbesondere zur Herstellung einer Streichmasse für leichtgewichtige gestrichene Tiefdruckpapiere (LWC), vorzugsweise zur Herstellung von leichtgewichtigen gestrichenen Tiefdruckpapieren (LWC) bei hoher Auftragsgeschwindigkeit (bis 1.500 m/min).

18. Verwendung des $CaCO_3$-Talkum-Streichpigmentslurries nach Anspruch 17 zur Herstellung von Rollen-Offsetpapieren, insbesondere zur Herstellung von leichtgewichtigen gestrichenen Rollen-Offsetpapieren (LWC-Rollen-Offsetpapieren).

## Claims

1. A $CaCO_3$-talc coating pigment slurry comprising mixed $CaCO_3$ and talc pigments, water, and at least one grinding aid, characterized in that the slurry consists of the following four co-ground components:

   a. 24 to 64 % by weight $CaCO_3$,
   b. 5 to 48 % by weight talc,
   c. 20 to 40 % by weight $H_2O$, and
   d. an adjuvant combination consisting of

   0.05 to 1.4 %     by weight of at least one commercially available grinding aid and
   0.05 to 1.2 %     by weight of at least one commercially available dispersing agent,

   and that the mixed pigments have an average statistical particle diameter of 0.4 µm to 1.5 µm.

2. A $CaCO_3$-talc coating pigment slurry according to claim 1, characterized in that the mixed pigments have the following particle size distribution:

   a. 95 to 100 % particles < 10 µm,
   b. 50 to 95 % particles < 2 µm,
   c. 27 to 75 % particles < 1 µm,
   d. 0.1 to 35 % particles < 0.2 µm,

   based on the equivalent diameter of each particle.

3. A $CaCO_3$-talc coating pigment slurry according to any of the preceding claims, characterized in that it consists of the following four co-ground components:

   a. 28 to 61 % by weight $CaCO_3$,
   b. 10 to 44 % by weight talc,
   c. 22 to 38 % by weight $H_2O$, and
   d. an adjuvant combination consisting of

   0.1 to 1.3 % by weight     of at least one commercially available grinding aid and
   0.1 to 1.0 % by weight     of at least one commercially available dispersing agent,

   and that the mixed pigments have an average statistical particle diameter of 0.4 µm to 1.5 µm.

4. A $CaCO_3$-talc coating pigment slurry according to any of the preceding claims, characterized in that it consists of the following four co-ground components:

   a. 33 to 56 % by weight $CaCO_3$,
   b. 14 to 37 % by weight talc,
   c. 25 to 36 % by weight $H_2O$, and
   d. an adjuvant combination consisting of

   0.2 to 1.2 % by weight     of at least one commercially available grinding aid and
   0.2 to 0.6 % by weight     of at least one commercially available dispersing agent,

and that the mixed pigments have an average statistical particle diameter of 0.4 µm to 1.5 µm.

5. A $CaCO_3$-talc coating pigment slurry according to any of the preceding claims, characterized in that it consists of the following four co-ground components:

   a. 39 to 51 % by weight $CaCO_3$,
   b. 18 to 31 % by weight talc,
   c. 27 to 33 % by weight $H_2O$, and
   d. an adjuvant combination consisting of

   0.3 to 0.8 % by weight      of at least one commercially available grinding aid and
   0.25 to 0.5 % by weight     of at least one commercially available dispersing agent,

   and that the mixed pigments have an average statistical particle diameter of 0.4 µm to 1.5 µm.

6. A $CaCO_3$-talc coating pigment slurry according to any of the preceding claims, characterized in that it consists of the following four co-ground components:

   a. 44 to 48 % by weight $CaCO_3$,
   b. 21 to 25 % by weight talc,
   c. 28.2 to 32.2 % by weight water, and
   d. an adjuvant combination consisting of

   0.35 to 0.45 % by weight    of at least one commercially available grinding aid and
   0.35 to 0.45 % by weight    of at least one commercially available dispersing agent,

   and that the mixed pigments have an average statistical particle diameter of 0.4 µm to 1.5 µm.

7. A $CaCO_3$-talc coating pigment slurry according to any of the preceding claims, characterized in that the mixed pigments have an average statistical particle diameter of 0.7 to 1.3 µm.

8. A $CaCO_3$-talc coating pigment slurry according to any of the preceding claims, characterized in that the mixed pigments have the following particle size distribution:

   a. 96 to 100 % particles < 10 µm,
   b. 60 to 92 % particles < 2 µm,
   c. 35 to 70 % particles < 1 µm,
   d. 3 to 28 % by weight particles < 0.2 µm

   based on the equivalent diameter of each particle.

9. A $CaCO_3$-talc coating pigment slurry according to any of the preceding claims, characterized in that the mixed pigments have an average statistical particle diameter of 0.8 to 1.1 µm.

10. A $CaCO_3$-talc coating pigment slurry according to any of the preceding claims, characterized in that the mixed pigments have the following particle size distribution:

   a. 98 to 100 % particles < 10 µm,
   b. 68 to 85 % particles < 2 µm,
   c. 43 to 62 % particles < 1 µm,
   d. 9 to 22 % by weight particles < 0.2 µm

   based on the equivalent diameter of each particle.

11. A $CaCO_3$-talc coating pigment slurry according to any of the preceding claims, characterized in that the mixed pigments have an average statistical particle diameter of 0.9 µm.

12. A $CaCO_3$-talc coating pigment slurry according to any of the preceding claims,

characterized in that the mixed pigments have the following particle size distribution:

a. 99 % particles < 10 $\mu$m,
b. 78 % particles < 2 $\mu$m,
c. 53 % particles < 1 $\mu$m,
d. 28 % by weight particles < 0.2 $\mu$m,

based on the equivalent diameter of each particle.

13. A $CaCO_3$-talc coating pigment slurry according to any of the preceding claims,
characterized in that

the grinding aid is a water-soluble polymer or copolymer which contains acid groups selected from carboxyl groups and/or sulfonic acid groups or one of their water-soluble salts,
the grinding aid consists preferably of the polymers and/or copolymers of acrylic acids,
the grinding aid is preferably constituted by the acrylic acid polymers and/or copolymers which are completely neutralized by a) at least one neutralizing agent having a monovalent function and b) at least one neutralizing agent having a polyvalent function or an amine and that in particular the grinding aid consists of that fraction of the completely neutralized acrylic acid polymers and/or copolymers which has a specific viscosity between 0.3 and 0.8.

14. A $CaCO_3$-talc coating pigment slurry according to any of the preceding claims,
characterized in that

the grinding aid is a polymer or copolymer of at least one of the monomers and/or comonomers of the group consisting of the acrylic, methacrylic, itaconic, crotonic, and fumaric acids and maleic anhydride and
that in particular the grinding aid is a Na-Ca salt of a polyacrylic acid.

15. A $CaCO_3$-talc coating pigment slurry according to any of the preceding claims,
characterized in that

the dispersing agent is a water-soluble polymer or copolymer which contains acid groups selected from carboxyl groups and/or sulfonic acid groups or one of their water-soluble salts,
the dispersing agent preferably consists of the polymers and/or copolymers of acrylic acid and
that the dispersing agent is in particular a potassium salt of a polyacrylic acid or
that the dispersing agent is in particular a potassium salt of a copolymer of acrylic acid and butylacrylic acid.

16. A process of preparing the $CaCO_3$-talc coating pigment slurry in accordance with the invention as claimed in any of the preceding claims,
characterized in that
the precomminuted $CaCO_3$ and the precomminuted talc are, in a manner known per se, subjected to wet cogrinding in an aqueous suspension which contains an adjuvant combination consisting of 0.05 - 1,4 % by weight of at least one commercially available grinding aid and 0.05 - 1.2 % by weight of at least one commercially available dispersing agent.

17. The use of the $CaCO_3$-talc coating pigment slurry according to any of the preceding claims for preparing a coating composition for use in the papermaking industry, in particular for preparing a composition for coating papers for gravure printing, in particular for preparing a composition for coating lightweight coated papers (LWC papers) for gravure printing, preferably for preparing lightweight coated papers (LWC papers) for gravure printing, wherein the composition is applied at a high speed (up to 1.500 m/min.).

18. The use of the $CaCO_3$-talc coating pigment slurry according to claim 17 for preparing reel papers for offset printing, in particular for making lightweight coated reel papers (LWC reel papers) for offset printing.

**Revendications**

1. Bouillie pigmentaire pour le couchage à base de talc et de carbonate de calcium, contenant un mélange pigmentaire de talc et de carbonate de calcium, de l'eau et un auxiliaire de pulvérisation, caractérisée en ce qu'elle est composée des quatre composants co-moulus suivants :

a) 24 à 64 % en poids $CaCO_3$
b) 5 à 48% en poids de talc
c) 20 à 40 % en poids d'eau et
d) une combinaison d'auxiliaires composée de

0,05 à 1,4 % en poids d'auxiliaire de pulvérisation disponible dans le commerce et
0,05 à 1,2 % en poids d'agent de dispersion disponible dans le commerce

et en ce que le mélange pigmentaire présente un diamètre de particules statistique moyen de 0,4 à 1,5 μm.

2. Bouillie pigmentaire pour le couchage à base de talc et de carbonate de calcium selon la revendication 1, caractérisée en ce que le mélange pigmentaire présente la distribution de taille des particules suivante :

a) 95 à 100 % des particules < 10 μm
b) 50 à 95 % des particules < 2 μm
c) 27 à 75 % des particules <1 μm
d) 0,1 à 35 % des particules < 0,2 μm,

rapportée chaque fois au diamètre équivalent des particules.

3. Bouillie pigmentaire pour le couchage à base de talc et de carbonate de calcium selon une ou plusieurs des revendications précédentes caractérisée en ce qu'elle est composée des quatre composants co-moulus suivants :

a) 28 à 61 % en poids $CaCO_3$
b) 10 à 44 % en poids de talc
c) 22 à 38 % en poids d'eau et
d) une combinaison d'auxiliaires composée de

0,1 à 1,3% en poids d'auxiliaire de pulvérisation disponible dans le commerce et
0,1 à 1,0 % en poids d'agent de dispersion disponible dans le commerce

et en ce que le mélange pigmentaire présente un diamètre de particules statistique moyen de 0,4 à 1,5 μm.

4. Bouillie pigmentaire pour le couchage à base de talc et de carbonate de calcium selon une ou plusieurs des revendications précédentes caractérisée en ce qu'elle est composée des quatre composants co-moulus suivants :

a) 33 à 56 % en poids $CaCO_3$
b) 14 à 37 % en poids de talc
c) 25 à 36 % en poids d'eau et
d) une combinaison d'auxiliaires composée de

0,2 à 1,2 % en poids d'auxiliaire de pulvérisation disponible dans le commerce et
0,2 à 0,6 % en poids d'agent de dispersion disponible dans le commerce

et en ce que le mélange pigmentaire présente un diamètre de particules statistique moyen de 0,4 à 1,5 μm.

5. Bouillie pigmentaire pour le couchage à base de talc et de carbonate de calcium selon une ou plusieurs des revendications précédentes caractérisée en ce qu'elle est composée des quatre composants co-moulus suivants :

a) 39 à 51 % en poids $CaCO_3$
b) 18 à 31 % en poids de talc
c) 27 à 33% en poids d'eau et
d) une combinaison d'auxiliaires composée de

0,3 à 0,8 % en poids d'auxiliaire de pulvérisation disponible dans le commerce et

0,25 à 0,5 % en poids d'agent de dispersion disponible dans le commerce

et en ce que le mélange pigmentaire présente un diamètre de particules statistique moyen de 0,4 à 1,5 μm.

6.   Bouillie pigmentaire pour le couchage à base de talc et de carbonate de calcium selon une ou plusieurs des revendications précédentes caractérisée en ce qu'elle est composée des quatre composants co-moulus suivants :

   a) 44 à 48 % en poids CaCO₃
   b) 21 à 25 % en poids de talc
   c) 28,2 à 32,2 % en poids d'eau et
   d) une combinaison d'auxiliaires composée de

   0,35 à 0,45 % en poids d'auxiliaire de pulvérisation disponible dans le commerce et
   0,35 à 0,45 % en poids d'agent de dispersion disponible dans le commerce

et en ce que le mélange pigmentaire présente un diamètre de particules statistique moyen de 0,4 à 1,5 μm.

7.   Bouillie pigmentaire pour le couchage à base de talc et de carbonate de calcium selon une ou plusieurs des revendications précédentes caractérisée en ce que le mélange pigmentaire présente un diamètre de particules statistique moyen de 0,7 à 1,3 μm.

8.   Bouillie pigmentaire pour le couchage à base de talc et de carbonate de calcium selon une ou plusieurs des revendications précédentes caractérisée en ce que le mélange pigmentaire présente la distribution de taille des particules suivante :

   a) 96 à 100 % des particules < 10 μm
   b) 60 à 92 % des particules < 2 μm
   c) 35 à 70 % des particules <1 μm
   d) 3 à 28 % des particules < 0,2 μm,

rapportée chaque fois au diamètre équivalent des particules.

9.   Bouillie pigmentaire pour le couchage à base de talc et de carbonate de calcium selon une ou plusieurs des revendications précédentes caractérisée en ce que le mélange pigmentaire présente un diamètre de particules statistique moyen de 0,8 à 1,1 μm.

10. Bouillie pigmentaire pour le couchage à base de talc et de carbonate de calcium selon une ou plusieurs des revendications précédentes caractérisée en ce que le mélange pigmentaire présente la distribution de taille des particules suivante :

   a) 98 à 100 % des particules < 10 μm
   b) 68 à 85 % des particules < 2 μm
   c) 43 à 62 % des particules <1 μm
   d) 9 à 22 % des particules < 0,2 μm,

rapportée chaque fois au diamètre équivalent des particules.

11. Bouillie pigmentaire pour le couchage à base de talc et de carbonate de calcium selon une ou plusieurs des revendications précédentes caractérisée en ce que le mélange pigmentaire présente un diamètre de particules statistique moyen de 0,9 μm.

12. Bouillie pigmentaire pour le couchage à base de talc et de carbonate de calcium selon une ou plusieurs des revendications précédentes caractérisée en ce que le mélange pigmentaire présente la distribution de taille des particules suivante :

   a) 99 % des particules < 10 μm
   b) 78 % des particules < 2 μm
   c) 53 % des particules <1 μm

d) 28 % des particules < 0,2 µm,

rapportée chaque fois au diamètre équivalent des particules.

13. Bouillie pigmentaire pour le couchage à base de talc et de carbonate de calcium selon une ou plusieurs des revendications précédentes caractérisée

en ce que l'auxiliaire de pulvérisation est un polymère ou un copolymère soluble dans l'eau présentant une teneur en groupes acides, choisis parmi des groupes carboxyles et/ou des groupes acide sulfonique ou un de leurs sels solubles dans l'eau,
en ce que l'auxiliaire de pulvérisation est composé de préférence de polymères et/ou de copolymères d'acides acryliques,
en ce que l'auxiliaire de pulvérisation est formé de préférence par les polymères et/ou les copolymères d'acides acryliques qui sont complètement neutralisés par a) au moins un agent de neutralisation avec une fonction monovalente et b) au moins un agent de neutralisation avec une fonction polyvalente ou une amine et
en particulier en ce que l'auxiliaire de pulvérisation est composé de la fraction des polymères et/ou copolymères d'acides acryliques complètement neutralisés qui possède une viscosité spécifique comprise entre 0,3 et 0,8.

14. Bouillie pigmentaire pour le couchage à base de talc et de carbonate de calcium selon une ou plusieurs des revendications précédentes caractérisée

en ce que l'auxiliaire de pulvérisation est un produit de polymérisation et/ou de copolymérisation d'au moins un des monomères et/ou co-monomères choisis parmi le groupe acide acrylique, méthacrylique, itaconique, crotonique, fumarique et l'anhydride maléique et
en ce que en particulier l'auxiliaire de pulvérisation est un sel de sodium et de calcium d'un acide polyacrylique.

15. Bouillie pigmentaire pour le couchage à base de talc et de carbonate de calcium selon une ou plusieurs des revendications précédentes caractérisée

en ce que l'agent de dispersion est un polymère ou un copolymère soluble dans l'eau présentant une teneur en groupes acides choisis, parmi des groupes carboxyles et/ou des groupes acide sulfonique ou un de leurs sels solubles dans l'eau,
en ce que l'agent de dispersion est composé de préférence des polymères et/ou copolymères de l'acide acrylique et
en ce que l'agent de dispersion est en particulier un sel de potassium d'un acide polyacrylique ou
en ce que l'agent de dispersion est en particulier un sel de potassium d'un produit de copolymérisation d'acide acrylique et d'acide butylacrylique.

16. Procédé de préparation d'une bouillie pigmentaire pour le couchage à base de talc et de carbonate de calcium selon une ou plusieurs des revendications précédentes, caractérisé en ce que d'une façon connue en soi, le $CaCO_3$ prémoulu est co-moulu mouillé, avec le talc prémoulu dans une suspension aqueuse en ajoutant une combinaison d'auxiliaires composée de 0,05 à 1,4 % en poids d'un auxiliaire de pulvérisation disponible dans le commerce et de 0,05 à 1,2 % en poids un agent de dispersion disponible dans le commerce.

17. Utilisation de la bouillie pigmentaire pour le couchage à base de talc et de carbonate de calcium selon une ou plusieurs des revendications précédentes pour la préparation d'une pâte de couchage pour l'industrie papetière, en particulier pour la préparation d'une pâte de couchage pour des papiers héliographiques, en particulier pour la préparation d'une pâte de couchage pour des papiers héliographiques couchés de faible poids (LWC), de préférence pour la préparation de papiers héliographiques couchés de faible poids (LWC) avec grande vitesse de dépôt jusqu'à 1500 m/min).

18. Utilisation de la bouillie pigmentaire pour le couchage à base de talc et de carbonate de calcium selon la revendication 17 pour la préparation de papiers continus pour l'impression offset, en particulier pour la préparation de papiers couchés continus de faible poids pour l'impression offset (papiers continus LWC pour l'impression offset).